# DEMANDE DE BREVET EUROPEEN

(11) **EP 2 511 252 A1**
(43) Date de publication de la demande: **17.10.2012**
(21) Numéro de dépôt: 12360028.0
(22) Date de dépôt: 03.04.2012
(51) Int. Cl.: C05F 17/02, B02C 18/00, B09B 3/00

(54) **Broyeur composteur, procédé de fabrication et utilisation**

(30) Priorité: 14.04.2011 FR 1101182
(71) Demandeur: Fuchs, Roger, 67850 Offendorf (FR)
(72) Inventeur: Fuchs, Roger, 67850 Offendorf (FR)
(74) Mandataire: Munier, Laurent

(57) **Abrégé**

Le Broyeur composteur (1) comprend un premier composant (2) meuble de base muni de pieds supports (3), d'une ouverture supérieure et équipé d'un tiroir (6) formant bac de récupération , une grille (10) étant disposée de manière rotative pour fermer l'ouverture supérieure. Un deuxième composant (11) de périphérie correspondante au premier composant (2) est placé sur le meuble de base (2). Ledit deuxième composant (11) étant ouvert sur ces faces supérieures et inférieures, au moins une grille support étant disposée de manière rotative. Un troisième composant (14) de périphérie correspondante au deuxième composant (11) étant placée sur le deuxième composant, ledit troisième composant étant muni d'au moins un couteau (15) actionné de l'extérieur et d'au moins un moyen de guidage (16) jusqu'au couteau depuis une ouverture supérieure (17), une ouverture inférieure (18) assurant la communication avec le deuxième composant.

Utilisation du broyeur composteur pour fabriquer du compost sur un balcon.

## Description

La présente invention concerne la fabrication de compost.

En premier lieu, la présente invention se rapporte à un broyeur composteur.

L'état de la technique propose des boîtiers dans lesquels sont placés des déchets végétaux tels que herbes, feuilles ou branches. Ces boîtiers sont des composteurs. Les composteurs connus sont fermés et il faut attendre que les déchets végétaux soient transformés en compost. L'état de la technique connaît mais sans aucun lien ni moyens de jonction avec les composteurs des broyeurs.

Les boîtiers composteurs connus présentent des inconvénients parmi lesquels l'obligation de mettre à la dimension du volume interne les déchets végétaux.

De plus, même à une dimension suffisamment réduite pour entrer dans le volume intérieur du boîtier connu, les branches se superposent et remplissent avec beaucoup de vide ledit boîtier connu. Ceci nécessite de tasser les branches qui restent élastiques.

L'invention résout ce problème sans augmenter l'encombrement au sol par un broyeur composteur comprenant au moins :
o un premier composant, meuble de base muni de pieds supports, d'une ouverture supérieure et équipé d'un tiroir formant bac de récupération , une grille étant disposée de manière rotative pour fermer l'ouverture supérieure,
o un ou plusieurs deuxième composant de périphérie correspondante au premier composant est placé sur le meuble de base, ledit deuxième composant étant ouvert sur ces faces supérieures et inférieures, au moins une grille support étant disposée de manière rotative sur le deuxième composant,
o un troisième composant de périphérie correspondante au deuxième composant étant placée sur le deuxième composant, ledit troisième composant étant muni d'au moins un couteau actionné de l'extérieur et d'au moins un moyen de guidage jusqu'au couteau depuis une ouverture supérieure, une ouverture inférieure assurant la communication avec le deuxième composant.

De plus, les composteurs connus laissent se propager les odeurs qui résultent de la transformation des matériaux végétaux et doivent être placés loin des habitations, ce qui empêche de les placer sur des balcons. Cet inconvénient est surmonté par un broyeur composteur comprenant un couvercle équipé d'un moyen anti-odeur, ledit couvercle fermant l'ouverture supérieure du troisième composant. Le moyen anti-odeur est un boîtier typiquement cylindrique comprenant un filtre et une pastille anti- odeur.

### 1. L'invention a encore pour objet l'utilisation d'un broyeur composteur conforme à celui décrit ci-dessus pour fabriquer du compost sur un balcon.

L'invention sera mieux comprise à la lecture d'un exemple non limitatif de réalisation de la présente invention qui va maintenant être décrit au regard des figures annexées :
La fig. 1 représente un broyeur composteur selon l'invention vue en éclaté.
La fig. 2 représente une autre variante de broyeur composteur selon l'invention vue en élévation.
La fig. 3 représente le troisième composant du broyeur composteur équipé de couteaux.

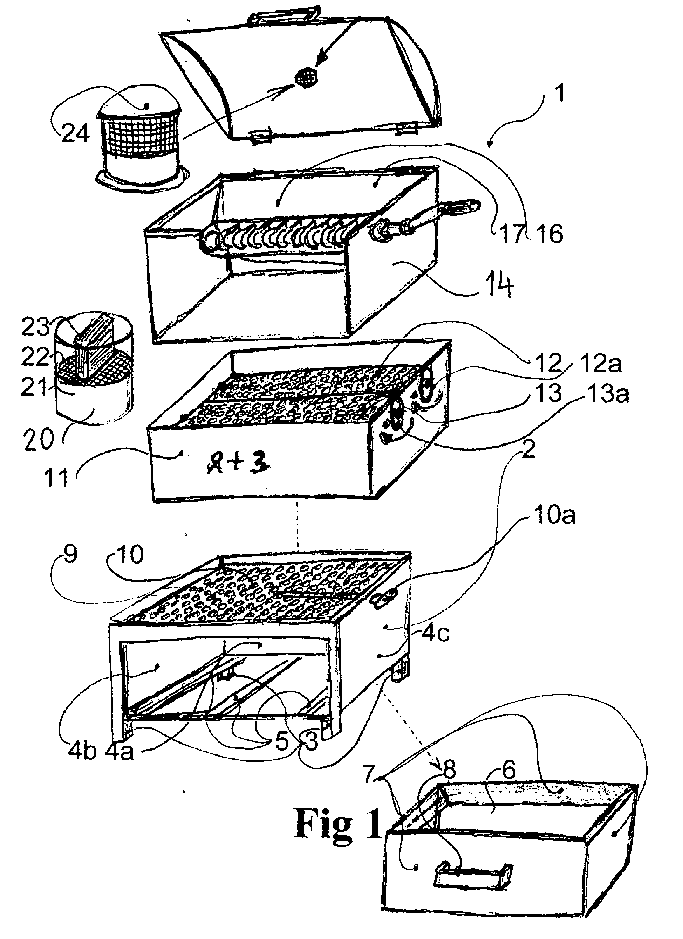

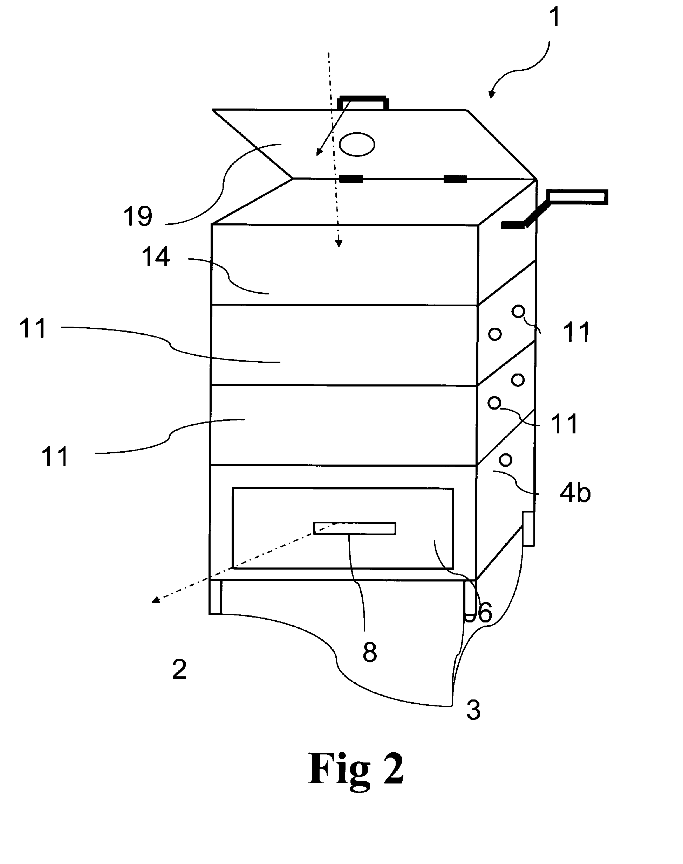

Le broyeur composteur 1, représenté sur les fig. 1 et 2, forme un ensemble comprenant trois composants principaux.

Le premier composant 2 est un meuble comprenant quatre pieds 3, une face arrière 4a, d'une face gauche 4b et d'une face droite 4c. Ces faces 4a, 4b, 4c sont des panneaux constitués d'une ou plusieurs plaques. Le fond est muni de traverses 5, support d'un tiroir amovible 6. Ainsi l'aération est assurée entre les traverses 5

Le tiroir 6 est de forme connue avec des parois latérales 7, un fond et une poignée 8 permettant l'ouverture.

L'accès à l'intérieur du tiroir 6 qui forme un bac se fait par le haut.

La face supérieure 9 du premier composant 2 est ouverte. Une grille rotative 10 est placée pour permettre l'ouverture et la fermeture de cette grille 10. La grille 10, même en position fermée, laisse passer l'aération.

Un axe équipé d'une poignée 10a est fixé sur la grille 10. L'axe de la poignée 10a passe par un trou ménagé dans la face 2. Ainsi, il est possible de faire pivoter la grille 10 pour faire tomber le compost dans le bac 6.

Un deuxième composant 11 en forme de caisse sans fond et sans couvercle est placé de manière correspondante sur le premier composant 2. Ce deuxième composant 11 est fermé par deux grilles rotatives 12, 13 abutant l'une l'autre, elles aussi équipées d'une poignée extérieure 12a, 13a. En variante d'exécution représenté fig. 2, deux deuxième composants 11 identiques sont superposés.

Enfin, un troisième composant 14 de périphérie correspondante au deuxième composant 11 est placée sur le deuxième composant 11, ledit troisième composant 14 étant muni de couteaux 15 actionnés de l'extérieur et d'au moins un moyen de guidage 16 jusqu'au couteau 15 depuis une ouverture supérieure 17, une ouverture inférieure 18 assurant la communication avec le deuxième composant 11.

Le broyeur composteur 1 est fermé par un couvercle 19 équipé d'un moyen anti-odeur 20. Ledit couvercle ferme l'ouverture supérieure 17 du troisième composant 14.

Le moyen anti-odeur 20 est un boîtier typiquement cylindrique 21 comprenant un filtre 22 et une pastille anti- odeur 23.

Ce boîtier 21 est fermé par un couvercle bombé 24 pour contenir la pastille 23.

Les couteaux du troisième composant 14 sont fixés sur un axe traversant 25 une paroi du troisième composant 14 actionné par une manivelle extérieure 26.

Le broyeur composteur présente en coupe horizontale une forme rectangulaire.

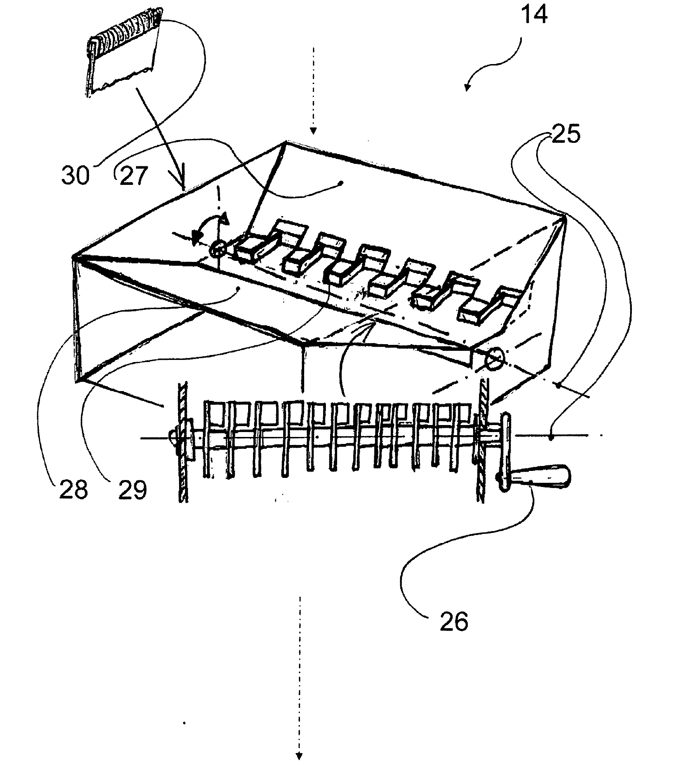

La Fig. 3 représente le moyen de guidage 16 des déchets végétaux dans le troisième composant 14.

Ce moyen de guidage comprend de deux plaques 23, 24 inclinées dans la direction de l'axe 25 des couteaux 15.

Ces plaques 23, 24 présentent en partie basse une dentelure 25 permettant le passage des couteaux 15 entre les dents de la dentelure 25.

Un joint 30 assure l'étanchéité entre les différents composants 2, 11 et 14.

Le fonctionnement du broyeur composteur 1 selon l'invention est le suivant :
L'opérateur ouvre le couvercle 19, introduit verticalement par le haut les déchets végétaux qui sont guidés par le moyen de guidage 16 jusqu'aux couteaux 15 et actionnent la manivelle 26.
Les déchets végétaux sont découpés en petits morceaux qui tombent sur les grilles 12, 13 du deuxième moyen 11. La disposition de plusieurs grilles 12, 13 permet de faire varier les ouvertures à travers les grilles 12, 13 et de sélectionner la taille des déchets végétaux qui tombent dans le composant inférieur.

Au bout d'un certain temps, l'opérateur actionne les poignées 13a et 12a, les déchets se transformant en compost tombent sur la grille 10.

Enfin, pour récupérer le compost, l'opérateur tourne la poignée 10a qui fait tomber le compost dans le tiroir, puis l'opérateur récupère ledit tiroir 6 avec la poignée 8.

Le broyeur composteur 1 selon l'invention étant d'un encombrement réduit au sol, fermé et muni d'un moyen anti-odeur 20 peut être utilisé sur un balcon.

Bien que l'invention ait été décrite en liaison avec des structures particulières, elle n'y est nullement limitée et on peut y apporter de nombreuses variantes.

Les combinaisons des différentes réalisations représentées sur les dessins ou décrites ci-dessus ne sortent pas du cadre de l'invention.

### SIGNES DE REFERENCE

- 1.: broyeur composteur
- 2.: premier composant
- 3.: pieds
- 4a.: face arrière
- 4b.: face gauche
- 4c.: face droite
- 5.: traverse
- 6.: tiroir
- 7.: parois latérales
- 8.: poignée
- 9.: face supérieure
- 10.: grille
- 10a.: poignée
- 11.: deuxième composant
- 12.: grille
- 12a.: poignée
- 13.: grille
- 13a.: poignée
- 14.: troisième composant
- 15.: couteaux
- 16.: moyen de guidage
- 17.: ouverture supérieure
- 18.: ouverture inférieure
- 19.: couvercle
- 20.: moyen anti-odeur
- 21.: boîtier
- 22.: filtre
- 23.: pastille anti-odeur
- 24.: couvercle du boîtier
- 25.: axe traversant
- 26.: manivelle
- 27.: plaque
- 28.: plaque
- 29.: dentelure
- 30.: joint

Les signes de référence insérés après les caractéristiques techniques mentionnées dans les revendications ont pour seul but de faciliter la compréhension de ces dernières et n'en limitent aucunement la portée.

## Revendications

1. Broyeur composteur (1) comprenant au moins un premier composant meuble de base (2) muni de pieds supports (3), présentant une ouverture supérieure et équipé d'un tiroir (6) formant bac de récupération, au moins une grille (10) étant disposée de manière rotative pour fermer l'ouverture supérieure ; au moins un deuxième composant (11) de périphérie correspondante au premier composant (2) est placé sur le meuble de base (2), ledit deuxième composant étant ouvert sur ces faces supérieures et inférieures, au moins une grille support étant disposée de manière rotative sur le deuxième composant (11) ; un troisième composant (14) de périphérie correspondante au deuxième composant (11) étant placée sur le deuxième composant, ledit troisième composant (14) étant muni d'au moins un couteau (15) actionné de l'extérieur et d'au moins un moyen de guidage (16) jusqu'au couteau depuis une ouverture supérieure (17), une ouverture inférieure (18) assurant la communication avec le deuxième composant.

2. Broyeur composteur selon la revendication précédente comprenant un couvercle (19) équipé d'un moyen anti-odeur (20), ledit couvercle fermant l'ouverture supérieure (17) du troisième composant.

3. Broyeur composteur selon la revendication précédente dans lequel le moyen anti-odeur est un boîtier (21) typiquement cylindrique comprenant un filtre et une pastille anti- odeur (23).

4. Broyeur composteur selon l'une des revendications précédentes dans lequel le couteau (15) est fixé sur un axe traversant une paroi du troisième composant (14) actionné par une manivelle extérieure.

5. Broyeur composteur (1) selon l'une des revendications précédentes présentant en coupe horizontale une forme rectangulaire.

6. Procédé de fabrication d'un broyeur composteur (1) conforme à l'une des revendications 1 à 5 par assemblage superposé du premier composant (2), partie inférieure sur lequel s'ajuste au moins le deuxième composant (11) et le troisième composant supérieur (14), l'ajustement entre les composants (2, 11 et 14) évitant que les déchets végétaux ne puissent sortir entre les composants, la combinaison verticale des éléments (2, 11 et 14) permettant une emprise au sol réduite et un traitement continu des déchets végétaux par gravité.

7. Utilisation d'un broyeur composteur (1) conforme à l'une des revendications 1 à 5 pour fabriquer du compost sur un balcon par les étapes suivantes :
- apport de déchets végétaux dans l'élément (14),
- découpage et broyage des déchets végétaux,
- transfert des déchets découpés par gravité dans l'élément (11),
- conservation aérée desdits déchets découpés pour transformation en compost,
- transfert par gravité dans le tiroir (6) de l'élément (2),
- retrait du compost pour utilisation comme engrais.
